# EUROPÄISCHE PATENTANMELDUNG

(11) **EP 2 664 551 A1**
(43) Veröffentlichungstag der Anmeldung: **20.11.2013**
(21) Anmeldenummer: 12168194.4
(22) Anmeldetag: 16.05.2012
(51) Int. Cl.: B65B 1/06, B65B 5/10, B65B 35/06, B65B 57/16, B65B 65/08, B65B 35/14, A61J 7/02, B65G 47/14

(54) **Verfahren zum optimierten Vereinzeln und Abgeben von kleinen pharmazeutischen Produkten**

(71) Anmelder: UHLMANN PAC-SYSTEME GmbH & Co. KG, 88471 Laupheim (DE)
(72) Erfinder: Gertitschke, Detlev, 88471 Laupheim (DE); Noe, Joachim, 89584 Ehingen (DE)
(74) Vertreter: Wächter, Jochen

(57) **Zusammenfassung**

Das Verfahren zum optimierten Vereinzeln und Abgeben von kleinen pharmazeutischen Produkten (4) umfasst folgende Schritte: Bereitstellen eines Vorratsbehälters (2) für kleine pharmazeutische Produkte (4) mit einem Dosierelement (6); Bereitstellen eines Schwingförderers (8) zum Weitertransport der aus dem Vorratsbehälter (2) abgegebenen Produkte (4); Bereitstellen einer Abgabeeinrichtung (18) zum Weiterleiten der vom Schwingförderer (8) transportierten Produkte (4); Messen der Menge an Produkten (4) auf einem Anfangsbereich des Schwingförderers (8) im Bereich nahe dem Dosierelement (6) mittels eines Eingangssensors (20); Zählen der durch die Abgabeeinrichtung (18) hindurchtretenden vereinzelten Produkte (4) mittels eines Zählsensors (22); und automatisches Einstellen von Betriebsparametern des Dosierelements (6) und des Schwingförderers (8) auf Basis der vom Eingangssensor (20) und vom Zählsensor (22) ermittelten Werte mittels einer Regeleinrichtung (24).

## Beschreibung

Die vorliegende Erfindung betrifft ein Verfahren zum optimierten Vereinzeln und Abgeben von kleinen pharmazeutischen Produkten.

Das gezielte Vereinzeln und Abgeben von Schüttgut ist in vielen industriellen Bereichen von Relevanz. Besonders wichtig ist dies im Bereich der pharmazeutischen Industrie, wo kleine pharmazeutische Produkte wie Tabletten, Kapseln oder Dragees, die zunächst als Schüttgut vorliegen, vereinzelt, gezählt und schließlich in Fläschchen oder Blisterverpackungen abgefüllt werden. Die pharmazeutischen Produkte werden dabei üblicherweise in einem Vorratsbehälter als Schüttgut aufgenommen und von dort aus auf einen Schwingförderer abgegeben, auf dem der anfängliche Produktteppich entzerrt und die Produkte somit vereinzelt werden. Anschließend werden die Produkte durch eine Abgabeeinrichtung, beispielsweise eine Produktrutsche, an Fläschchen, Blisterverpackungen oder weiterführende Zuführungen abgegeben.

Da Produkte mit verschiedenen Größen und Formen unterschiedliche Fördercharakteristika aufweisen, müssen bei einem Produktwechsel die Einstellungen der an der Produktförderung beteiligten Elemente jedes Mal neu ermittelt werden. Dies wird in vielfältigen Testläufen durchgeführt und erfordert eine manuelle Einstellung durch den Bediener.

Der vorliegenden Erfindung liegt die Aufgabe zugrunde, ein Verfahren zum optimierten Vereinzeln und Abgeben von kleinen pharmazeutischen Produkten zu schaffen, mit dem die Inbetriebnahmezeiten reduziert werden und die Ausbringleistung optimiert wird.

Diese Aufgabe wird durch die Merkmale des Anspruchs 1 gelöst.

Erfindungsgemäß umfasst das Verfahren zum optimierten Vereinzeln und Abgeben von kleinen pharmazeutischen Produkten folgende Schritte:
- Bereitstellen eines Vorratsbehälters für kleine pharmazeutische Produkte mit einem Dosierelement zum Beeinflussen einer aus dem Vorratsbehälter abgegebenen Menge an Produkten;
- Bereitstellen eines Schwingförderers zur Aufnahme und zum Weitertransport der aus dem Vorratsbehälter abgegebenen Produkte;
- Bereitstellen einer Abgabeeinrichtung zum Aufnehmen und Weiterleiten der vom Schwingförderer transportierten Produkte;
- Messen der Menge an Produkten auf einem Anfangsbereich des Schwingförderers im Bereich nahe dem Dosierelement mittels eines Eingangssensors;
- Zählen der durch die Abgabeeinrichtung hindurchtretenden vereinzelten Produkte mittels eines Zählsensors; und
- automatisches Einstellen von Betriebsparametern des Dosierelements und des Schwingförderers auf Basis der vom Eingangssensor und vom Zählsensor ermittelten Werte über eine Regeleinrichtung.

Auf diese Weise gelingt es, die Inbetriebnahmezeiten bei einem Produktwechsel deutlich zu reduzieren und gleichzeitig eine möglichst hohe Fördermenge bei sicherem Betrieb zu gewährleisten.

Ein Qualitätssensor überprüft vor der Zählung vorzugsweise die Qualität jedes vereinzelten Produkts. Auf diese Weise können beispielsweise gebrochene Tabletten identifiziert werden.

Besonders bevorzugt ist es, wenn vor der Weitergabe der Produkte durch die Abgabeeinrichtung die Produkte, die auf Basis der vom Qualitätssensor ermittelten Messwerte als schlecht eingestuft werden, ausgeschieden werden. Auf diese Weise kann die Anzahl von aufgrund fehlerhafter Befüllung auszuscheidender Behälter minimiert werden.

Der Qualitätssensor ist vorzugsweise in einem Eingangsbereich der Abgabeeinrichtung angeordnet. An dieser Stelle sind die Produkte aufgrund ihrer Schwerkraft noch besser vereinzelt als auf dem Schwingförderer.

Der Eingangssensor hingegen ist vorzugsweise als Ultraschallsensor ausgebildet. Somit kann auf einfache Weise die gewünschte Einlagigkeit des Produktteppichs auf dem Schwingförderer überprüft werden.

Der Zählsensor ist hingegen vorzugsweise als optischer Lichtschrankensensor oder Lichtgittersensor ausgebildet.

Vorzugsweise überprüft ein Fördergütesensor in einem Endbereich des Schwingförderers die Fördergüte der Produkte auf dem Schwingförderer. Auf diese Weise kann beispielsweise die Lage der geförderten Produkte überprüft werden.

Die Messwerte des Fördergütesensors werden ebenfalls zum Einstellen von Betriebsparametern zumindest des Schwingförderers, eventuell auch des Dosierelements, verwendet.

Der Fördergütesensor ist dabei vorzugsweise als optische Kamera ausgebildet.

Das Dosierelement umfasst vorzugsweise ein Schieberelement zur Beeinflussung der Menge an durch einen Ausgabespalt abgegebenen Produkten, wobei das Schieberelement an seinem vorderen Endbereich eine elastische, im Wesentlichen U-förmige Schlaufe aufweist, wobei ein rückwärtiger Teilbereich des oberen Abschnitts der Schlaufe fixiert ist und wobei ein rückwärtiger Teilbereich des unteren Abschnitts der Schlaufe mit einem Linearantrieb verbunden ist, der sowohl für eine Breitenverstellung des Ausgabespalts durch translatorische Bewegung des unteren Abschnitts der Schlaufe als auch für eine Hin- und Herbewegung des unteren Abschnitts der Schlaufe mit kleiner Amplitude geeignet ist. Auf diese Weise können Produkte unterschiedlicher Größe und Form sicher, gleichmäßig und schonend an den Schwingförderer abgegeben werden. Aufgrund der Elastizität der Schlaufe und der variablen Einstellmöglichkeiten von Position und Bewegungsart der Schlaufe kann somit durch sinnvolle Regelung ein gleichmäßiger Produktstrom erzielt werden.

Hierbei ist es besonders bevorzugt, wenn die elastische Schlaufe aus lebensmittelechtem Gummi, vorzugsweise aus Vulkollan, gebildet ist. Dadurch ist einerseits eine Produkt schonende Behandlung gewährleistet, während andererseits eine gewisse Stabilität der Schlaufe erhalten bleibt.

Die Dosierung hat sich als besonders effektiv erwiesen, wenn das Schieberelement unter einem Winkel von zwischen 0° und 50°, vorzugsweise zwischen 0° und 35°, zur Horizontalen angeordnet ist.

Als Linearantrieb kommt in erster Linie ein elektromagnetischer Linearmotor in Frage, da dieser stufenlos verstellbar ist und neben größeren translatorischen Bewegungen auch kleine Hin- und Herbewegungen in hoher Frequenz durchführen kann und stufenlos einstellbar ist.

Weitere Merkmale und Vorteile der Erfindung ergeben sich aus der nachfolgenden Beschreibung unter Bezugnahme auf die Zeichnungen.
- Fig. 1: ist eine schematische Ansicht eines Aufbaus für das erfindungsgemäße Verfahren zum optimierten Vereinzeln und Abgeben von Schüttgut in einer Basisversion;
- Fig. 2: ist eine schematische Ansicht eines Aufbaus für das erfindungsgemäße Verfahren zum optimierten Vereinzeln und Abgeben von Schüttgut in einer komplexeren Variante; und
- Fig. 3: ist eine schematische Darstellung einer bevorzugten Ausführungsform eines Dosierelements, das im Rahmen des erfindungsgemäßen Verfahrens verwendet wird.

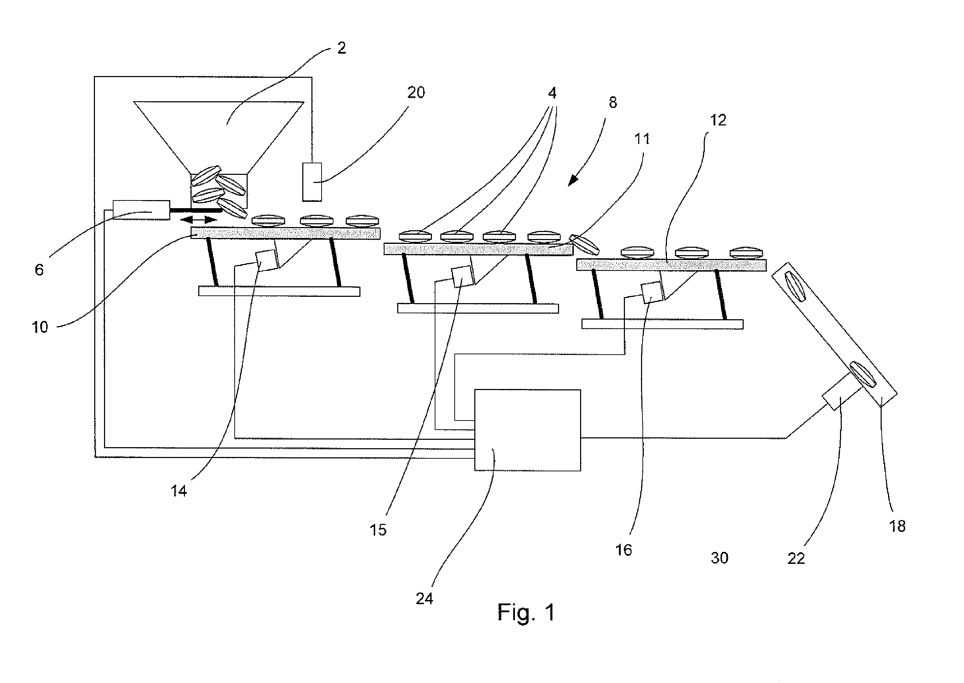

Das in Fig. 1 dargestellte System zum Vereinzeln und Abgeben von pharmazeutischen Produkten umfasst einen Vorratsbehälter 2, der zur Aufnahme kleiner pharmazeutischer Produkte 4 wie Tabletten, Kapseln, Dragees, etc. geeignet ist. Im Beispiel der Fig. 1 ist der Vorratsbehälter 2 als Trichter ausgebildet. Neben der Trichterform sind jedoch auch andere geometrische Ausgestaltungen des Vorratsbehälters 2 denkbar.

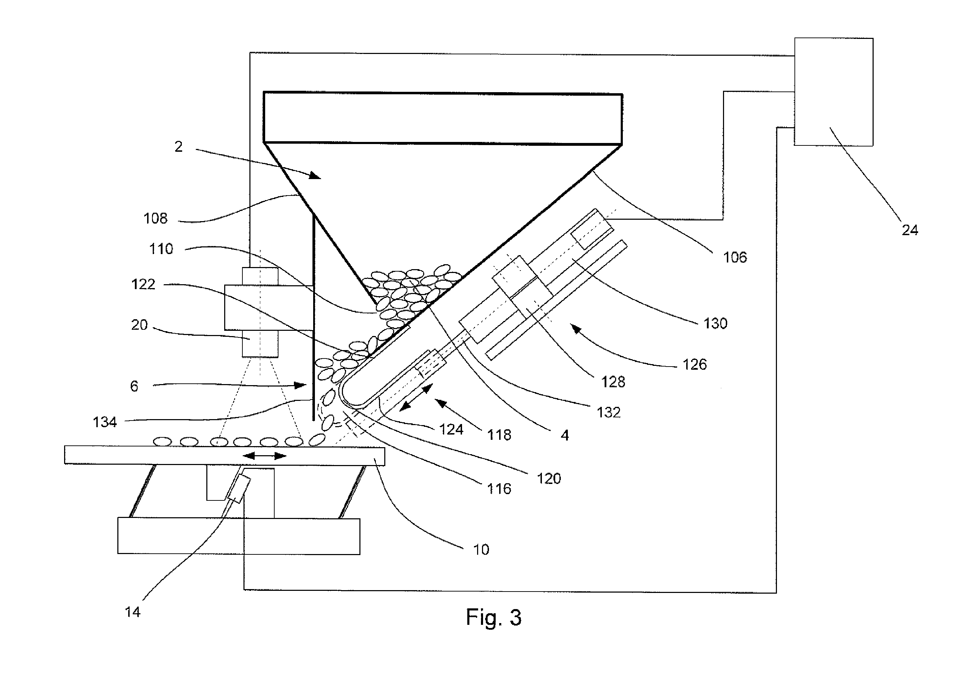

In einem Ausgangsbereich des Vorratsbehälters 2 ist ein Dosierelement 6 angeordnet, welches die aus dem Vorratsbehälter 2 abgegebene Menge an kleinen pharmazeutischen Produkten 4 beeinflusst. Eine bevorzugte Ausführungsform des Dosierelements 6 wird weiter unten unter Bezugnahme auf Fig. 3 näher beschrieben. Es kommen jedoch auch alle möglichen anderen Dosierelemente 6 in Frage, welche geeignet sind, die Menge der aus dem Vorratsbehälter 2 abgegebenen Produkte 4 zu steuern.

Die durch das Dosierelement 6 freigegebenen Produkte 4 gelangen auf einen Schwingförderer 8, der die Produkte 4 aufnimmt und weitertransportiert. Der Schwingförderer 8 weist im dargestellten Beispielsfall einen ersten Abschnitt 10, einen zweiten Abschnitt 11 und einen dritten Abschnitt 12 auf, wobei der erste Abschnitt 10 durch einen ersten Antrieb 14 in Vibration versetzt wird, der zweite Abschnitt 11 durch einen zweiten Antrieb 15 in Vibration versetzt wird und der dritte Abschnitt 12 durch einen dritten Antrieb 16 in Vibration versetzt wird. Die drei Abschnitte 10, 11, 12 des Schwingförderers 8 sind somit entkoppelt und können jeweils einzeln angesteuert werden. In der Regel wird jeder Abschnitt 10, 11, 12 des Schwingförderers 8 mehrere Rinnen aufweisen, in denen die Produkte 4 transportiert werden. Üblicherweise erhöht sich die Vibrationsstärke der Antriebe 14, 15, 16 in stromabwärtiger Richtung, um die Produkte 4 kaskadierend möglichst gut zu vereinzeln. Der Schwingförderer 8 kann aber auch beispielsweise lediglich zwei entkoppelte Abschnitte oder mehr als drei entkoppelte Abschnitte aufweisen.

Die vom Schwingförderer 8 vereinzelten Produkte 4 werden am Ende des Schwingförderers 8 an eine Abgabeeinrichtung 18 abgegeben, die im dargestellten Beispielsfall als Produktrutsche ausgebildet ist. In der Abgabeeinrichtung 18 werden die Produkte 4 vorzugsweise aufgrund ihrer Schwerkraft noch stärker vereinzelt und schließlich an ein Behältnis (nicht dargestellt), beispielsweise ein Fläschchen oder ein Blisterband, oder an eine weiterführende Bearbeitungsvorrichtung (ebenfalls nicht dargestellt) abgegeben.

In einem Anfangsbereich des Schwingförderers 8 im Bereich nahe dem Dosierelement 6 ist ein Eingangssensor 20 angeordnet, der die Menge von Produkten 4 in dem Anfangsbereich des Schwingförderers 8 messen kann. Der Eingangssensor 20 ist vorzugsweise über dem Schwingförderer 8 angeordnet. Auch wenn eine Ausgestaltung des Eingangssensors 20 als optische Kamera oder kapazitiver Sensor denkbar ist, wird an dieser Stelle ein Ultraschallsensor bevorzugt.

Die Produkte 4 sollen an dieser Stelle lediglich einen einlagigen Produktteppich auf dem Schwingförderer 8 bilden. Ansonsten kann eine Vereinzelung der Produkte 4 bis zum Ausgang des Schwingförderers 8 nicht gewährleistet werden. Außerdem sollen auf dem Schwingförderer 8 kleine Bruchstücke von Produkten 4 bereits durch im Bodenbereich des Schwingförderers 8 angeordnete Siebflächen hindurchfallen, was nur bei einem einlagigen Produktteppich erreicht werden kann.

Die Höhe des Produktteppichs kann besonders gut durch den Ultraschallsensor bestimmt werden. Der Ultraschallsensor strahlt zyklisch einen kurzen, hochfrequenten Schallimpuls aus. Dieser pflanzt sich mit Schallgeschwindigkeit in der Luft fort. Trifft er auf ein Objekt, wird er dort reflektiert und gelangt als Echo zurück zum Ultraschallsensor. Aus der Zeitspanne zwischen dem Aussenden des Schallimpulses und dem Empfang des Echosignals berechnet der Ultraschallsensor intern die Entfernung zum Objekt. Die Auflösung des Abstandssignals liegt dabei im Bereich von Zehntel von Millimetern. Der vom Ultraschallsensor ausgestrahlte Schallimpuls liegt in Form einer schlanken Schallkeule vor, so dass Informationen über ein flächiges Sensorblickfeld erhalten werden können. Im vorliegenden Fall wird der Abstand zwischen den Produkten 4 auf dem Schwingförderer 8 und dem Ultraschallsensor als maßgebliche Richtgröße eingestellt, unter Umständen mit einem gewissen verpflichtenden Mindestabstand zwischen den einzelnen Produkten 4. Liegen übereinander gestapelte Produkte 4 vor, so wird dies durch den Ultraschallsensor sofort ermittelt.

Die durch die Abgabeeinrichtung 18 hindurchtretenden vereinzelten Produkte 4 werden mittels eines Zählsensors 22 gezählt. Der Zählsensor 22 kann noch in der Abgabeeinrichtung 18 angeordnet sein, aber auch erst nach deren Auslass. Der Zählsensor 22 kann beispielsweise als Lichtschranke oder als Lichtgittersensor ausgebildet sein. Auch andere Sensortechniken, wie beispielsweise ein kapazitiver Sensor, kommen in Betracht.

Bei Ausgestaltung des Zählsensors 22 als Lichtschrankensensor ermittelt bei festgelegter Orientierung des Produkts 4 (einfachster Fall) zum Zeitpunkt des Hindurchtretens durch den Zählsensor 22 eine Lichtschranke lediglich das Auftreten einer Signalunterbrechung.

Bei weitaus komplexeren Lichtgittertechnologien können zusätzlich Bewegungsmuster und/oder Formen der Tabletten erkannt werden. Dies ist vor allem dann wichtig, wenn die Produkte 4 im freien Fall durch den Zählsensor 22 hindurchtreten und somit sowohl hinsichtlich des genauen Durchtrittsortes als auch hinsichtlich ihrer im Messzeitpunkt vorhandenen Ausrichtung variabel sind.

Die Messwerte des Eingangssensors 20 und Zählsensors 22 werden an eine Regeleinrichtung 24 übermittelt, welche erfindungsgemäß Betriebsparameter des Dosierelements 6 und des Schwingförderers 8 automatisch einstellt. Als von der Regeleinrichtung 24 einzustellende Betriebsparameter des Dosierelements 6 kommen beispielsweise die Größe eines Austrittsspalts für die Produkte 4 sowie der Hub und die Frequenz einer möglichen Bewegung des Dosierelements 6 zum Verändern der Breite des Austrittsspalts oder als Förderbewegung für die Produkte 4 in Frage. Als einzustellende Betriebsparameter des Schwingförderers 8 kommen insbesondere der Hub und die Frequenz der Antriebe 14, 15, 16 sowie unter Umständen auch die Neigung der einzelnen Abschnitte 10, 11, 12 des Schwingförderers 8 in Betracht. Hierdurch werden die Prozesse des Einfahrens eines neuen Produkts 4 und einer Optimierung der Förderleistung automatisiert. Dies soll im Folgenden näher erläutert werden.

Zunächst wird das Signal am Eingangssensor 20 mit einer im späteren Betrieb maximal wünschenswerten Produktauflage bei ausgeschaltetem ersten Antrieb 14 des ersten Abschnitts 10 des Schwingförderers 8 eingelernt. Anschließend werden die Antriebe 14, 15, 16 des Schwingförderers 8 auf eine mittlere Leistung eingestellt. Das Dosierelement 6 gibt nun mit Betriebsparametern einer anfänglichen (willkürlichen) Einstellung Produkte 4 auf den Schwingförderer 8 ab, und die Menge an Produkten 4 auf dem Schwingförderer 8 wird vom Eingangssensor 20 mit dem vorbestimmten Maximalwert verglichen. Außerdem zählt der Zählsensor 22 die durch die Abgabeeinrichtung 18 tretenden Produkte 4. Das Ergebnis des Zählsensors 22 wird durch die Regeleinrichtung 24 mit einem gewünschten vorbestimmten Leistungswert verglichen. Liegt die Menge an austretenden Produkten 4 unter dem gewünschten Leistungswert, so werden die Betriebsparameter des Dosierelements 6 und/oder des Schwingförderers 8 in Richtung eines höheren Durchsatzes angepasst.

In der Regel wird zunächst die Abgabe durch das Dosierelement 6 so lange erhöht, bis der Eingangssensor 20 anzeigt, dass sich die maximal zulässige Produktmenge bzw. Produktdichte auf dem Schwingförderer 8 befindet. Daraufhin werden die Antriebe 14, 15, 16 in Richtung einer höheren Fördergeschwindigkeit angesteuert, bis der gewünschte Durchsatz erreicht ist.

Die minimal einzuhaltende Zeitspanne zwischen zwei Produkten 4 im Ausgabebereich der Abgabevorrichtung 18 wird hierbei durch die Auflösung des Zählsensors 22 definiert. Im Falle einer nachfolgenden Zwischenspeicherung von Produkten 4 (beispielsweise bei Flaschenbefüllung) kann auch die für einen Absperrvorgang des jeweiligen Zuführkanals notwendige Zeit diese Kapazitätsgrenze bestimmen. Im Idealfall kann der Zählsensor 22 feststellen, wenn diese Zeitspanne unterschritten wird. Eine Anpassung der Betriebsparameter des Dosierelements 6 und/oder Schwingförderers 8 in Richtung einer stärkeren Vereinzelung (geringere Abgabemenge des Dosierelements 6, größere Geschwindigkeit des Schwingförderers 8) ist dann die Folge.

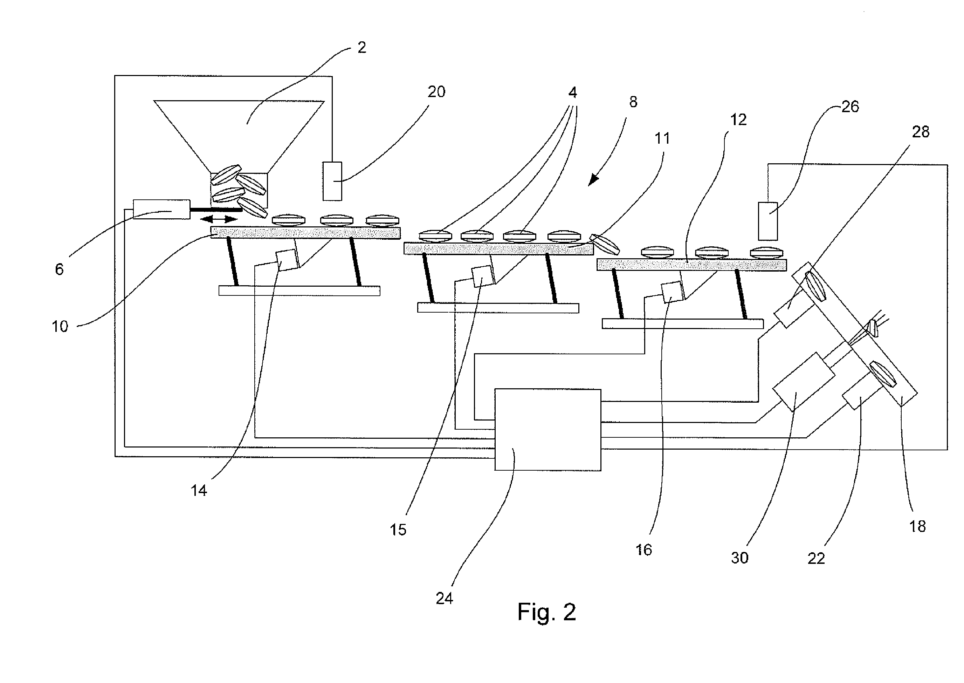

Das in Fig. 2 dargestellte System ist komplexer aufgebaut als das System aus Fig. 1. Es enthält zusätzlich zu den vorgenannten Komponenten noch einen in einem Endbereich des Schwingförderers 8 angeordneten Fördergütesensor 26, der die Fördergüte der Produkte 4 auf dem Schwingförderer 8 überprüft. Der Fördergütesensor 26 ist vorzugsweise als optische Kamera mit entsprechender Bildauswertung ausgebildet.

Beispielsweise wird hierbei überprüft, ob die Produkte 4 lagerichtig bzw. gleichmäßig auf dem Schwingförderer 8 transportiert werden. Die korrekte Lage der Produkte 4 kann sich nämlich bei zu starker Vibration des Schwingförderers 8 zum Negativen hin verändern, indem die Produkte 4 hüpfen, sich drehen etc. Außerdem kann es vorkommen, dass Produkte 4 noch nicht ausreichend vereinzelt wurden und beispielsweise übereinander liegen. All dies würde sich negativ auf den weiteren Verfahrensablauf auswirken. Die Messwerte des Fördergütesensors 26 werden daher ebenfalls zum Einstellen von Betriebsparametern zumindest des Schwingförderers 8 verwendet. In der Regel bedeutet dies, dass bei zu eng aneinander liegenden Produkten 4 die Geschwindigkeit des Schwingförderers 8 erhöht wird, während bei hüpfenden Produkten 4 die Geschwindigkeit reduziert werden muss. Da in letzterem Fall die Produkte 4 langsamer transportiert werden, erhöht sich bei gleicher Dosiermenge des Dosierelements 6 die Produktlage unter dem Eingangssensor 20. Zum Erreichen der eingelernten Produktlage muss daher die Dosierung am Dosierelement 6 durch die Regeleinrichtung 24 reduziert werden.

In Fig. 2 ist in Förderrichtung nach dem Fördergütesensor 26 ein Qualitätssensor 28 angeordnet, der die Qualität jedes vereinzelten Produkts 4 überprüfen soll. Als Qualitätssensor 28 kommt beispielsweise ein kapazitiver Sensor in Frage, der eine Brucherkennung liefert. Mehr bevorzugt sind allerdings Sensoren, wie sie aus den anhängigen europäischen Patentanmeldungen EP 11 159 845.4 oder EP 11 185 074.9 bekannt sind, deren Inhalt hiermit durch Bezugnahme vollumfänglich von der vorliegenden Anmeldung umfasst sein soll.

Der Qualitätssensor 28 ist vorzugsweise in einem Eingangsbereich der Abgabeeinrichtung 18 angeordnet. Auf Basis der vom Qualitätssensor 28 ermittelten Messwerte können Produkte 4 in Gutprodukte und Schlechtprodukte unterschieden werden. Falls dies gewünscht ist, kann noch in der Abgabeeinrichtung 18 auf Basis der vom Qualitätssensor 28 ermittelten Messwerte jedes als schlecht eingestufte Produkt 4 mittels einer Ausscheide- oder Sortiervorrichtung 30 ausgeschieden werden. Beispielsweise kann die Ausscheide- oder Sortiervorrichtung 30 als Ausblasvorrichtung ausgestaltet sein. Bei Verwendung der Ausscheide- oder Sortiervorrichtung 30 können Störungen im Betriebsablauf vermieden werden, beispielsweise aufgrund von Verstopfung von nachfolgenden Füllröhrchen durch gebrochene Produkte 4 oder aufgrund einer notwendigen nachträglichen Aussortierung von Blisterverpackungen oder Fläschchen, die mit mindestens einem Schlechtprodukt gefüllt sind.

Das Einfahren eines neuen Produktes 4 und die Leistungsoptimierung funktionieren nun folgendermaßen. Zunächst wird das Signal am Eingangssensor 20 mit einer im späteren Betrieb maximal wünschenswerten Produktauflage bei ausgeschaltetem ersten Antrieb 14 des ersten Abschnitts 10 des Schwingförderers 8 eingelernt. Der Fördergütesensor 26 wird ebenso bei ruhendem Schwingförderer 8 eingelernt.

Anschließend werden die Antriebe 14, 15, 16 des Schwingförderers 8 auf eine mittlere Leistung eingestellt. Das Dosierelement 6 gibt nun mit Betriebsparametern einer anfänglichen (willkürlichen) Einstellung Produkte 4 auf den Schwingförderer 8 ab, und die Menge an Produkten 4 auf dem Schwingförderer 8 wird vom Eingangssensor 20 mit dem vorbestimmten Maximalwert verglichen.

In der Regel wird zunächst die Abgabe durch das Dosierelement 6 so lange erhöht, bis der Eingangssensor 20 anzeigt, dass sich die maximal zulässige Produktmenge bzw. Produktdichte auf dem Schwingförderer 8 befindet. Daraufhin werden die Antriebe 14, 15, 16 in Richtung einer höheren Fördergeschwindigkeit angesteuert.

Dabei überprüft der Fördergütesensor 26, ob die Produkte 4 lagerichtig und gleichmäßig angeliefert werden. Ist dies nicht der Fall, wird die Fördergeschwindigkeit über die Antriebe 14, 15, 16 reduziert. Wenn der Fördergütesensor 26 einen korrekten Verlauf bestätigt, misst der Qualitätssensor 28 die Zeitabstände der am Qualitätssensor 28 vorbei gleitenden Produkte 4, die von der Regeleinrichtung 24 überprüft werden.

Die minimal einzuhaltende Zeitspanne zwischen zwei Produkten 4 wird dabei in den meisten Fällen durch die Auflösung des Qualitätssensors 28 (der in der Regel langsamer ist als der Zählsensor 22), die oben bereits beschriebene Zeit für einen Absperrvorgang, oder gegebenenfalls durch die für eine korrekte Betätigung der Ausscheide- oder Sortiervorrichtung 30 benötigte Zeit definiert.

Wird der minimal notwendige Zeitabstand zwischen zwei Produkten 4 unterschritten, d.h. die Produkte 4 folgen zu dicht aufeinander, wird zunächst die Dosierung der Produkte 4 durch das Dosierelement 6 reduziert.

Wird der minimal notwendige Zeitabstand zwischen zwei Produkten 4 nicht unterschritten, wird das Ergebnis des Zählsensors 22 verwendet, um die erzielte Leistung mit dem vorbestimmten Leistungswert zu vergleichen. Wenn der Vorgabewert von abgegebenen Tabletten pro Zeit noch nicht erreicht ist, wird die Förderleistung des Schwingförderers 8 über die Antriebe 14, 15, 16 so lange erhöht, bis entweder der Fördergütesensor 26 oder der Qualitätssensor 28 den maximal möglichen Wert erreichen. Wenn der Fördergütesensor 26 der limitierende Sensor ist und der Qualitätssensor 28 seinen Grenzwert noch nicht erreicht hat, bedeutet dies, dass noch Leistungsreserve vorhanden ist. In diesem Fall kann das Dosierelement 6 die Dosierung so lange erhöhen, bis entweder der Eingangssensor 20 oder der Qualitätssensor 28 ihren Grenzwert erreichen. Auf diese Weise sorgt die Regeleinrichtung 24 dafür, dass durch Beeinflussung mehrerer Stellschrauben die Sollleistung des Systems in kürzester Zeit erreicht wird.

In bestimmten Ausführungsformen kann der Fördergütesensor 26 beim System aus Fig. 2 auch weggelassen werden. Dann übernimmt der Qualitätssensor 28 auch die Überprüfung der Fördergüte.

In Fig. 3 ist eine spezielle Form des Dosierelements 6 dargestellt. Der Vorratsbehälter 2 weist im dargestellten Beispielsfall der Fig. 3 zwei nach unten hin aufeinander zulaufende Seitenwände 106, 108 auf. Die erste Seitenwand 106 ist dabei länger gestaltet als die zweite Seitenwand 108, so dass am unteren Ende der zweiten Seitenwand 108 eine Durchtrittsöffnung 110 für das Schüttgut gebildet wird. Gleichzeitig ist die erste Seitenwand 106 vorzugsweise über die Durchtrittsöffnung 110 hinaus verlängert und bildet somit einen überstehenden Steg, auf dem die kleinen pharmazeutischen Produkte 4 entlanggleiten.

Das Dosierelement 6 definiert einen Ausgabespalt 116 für die kleinen pharmazeutischen Produkte 4. Ein wesentliches Element des Dosierelements 6 ist ein vorzugsweise unter einem vorbestimmten Winkel zur Horizontalen angeordnetes Schieberelement 118, das zur Beeinflussung der Menge an durch den Ausgabespalt 116 abgegebenen kleinen pharmazeutischen Produkte 4 dient. Das Schieberelement 118 ist vorzugsweise unter einem Winkel von zwischen 0° und 50°, mehr bevorzugt zwischen 0° und 35°, zur Horizontalen angeordnet. Bevorzugt entspricht der Winkel auch der Ausrichtung der ersten Seitenwand 106 des Vorratsbehälters 2.

Das Schieberelement 118 weist an seinem vorderen Endbereich eine elastische, im Wesentlichen U-förmige Schlaufe 120 auf. Die elastische Schlaufe 120 ist vorzugsweise aus lebensmittelechtem Gummi, mehr bevorzugt aus Vulkollan, gebildet. Ein rückwärtiger Teilbereich des oberen Abschnitts 122 der Schlaufe 120 ist vorzugsweise an der verlängerten ersten Seitenwand 106 des Vorratsbehälters 2 fixiert, beispielsweise verschraubt. Er kann aber auch an einem anderen feststehenden Element befestigt sein, beispielsweise einer Halterung im Bereich des Vorratsbehälters 2 oder einer ähnlichen Konstruktion. Ein rückwärtiger Teilbereich des unteren Abschnitts 124 der Schlaufe 120 ist wiederum fest mit einem Linearantrieb 126 verbunden, beispielsweise durch Verschraubung.

Der Linearantrieb 126 ist im dargestellten Beispielsfall als elektromagnetischer Linearmotor ausgebildet, der in einer Halterung 128 gelagert ist. Der Linearmotor besteht aus einem Stator 130, der als Hohlzylinder ausgebildet ist und die Spulenwicklungen enthält. Im Stator 130 ist ein Läufer 132 verschiebbar gelagert, der aus einem Rohr oder einer Welle mit in Reihe angeordneten Permanentmagneten besteht. Durch geeignete Ansteuerung der Spulen erfolgt eine kontrollierte Krafteinwirkung auf die Permanentmagnete im Läufer 132 und somit eine stufenlose Bewegung des Läufers 132 im Stator 130. Der vordere Bereich des Läufers 132 ist mit dem rückwärtigen Teilbereich des unteren Abschnitts 124 der Schlaufe 120 verbunden. Selbstverständlich kann der elektromagnetische Linearmotor auch eine andere konstruktive Ausgestaltung aufweisen.

In der dargestellten Ausführungsform wird der Ausgabespalt 116 an einer Seite durch den Bogen der U-förmigen Schlaufe 120 und an der anderen Seite durch eine Begrenzungswand 134 begrenzt, die vorzugsweise im Wesentlichen vertikal verläuft, aber auch leicht geneigt angeordnet sein kann. Insgesamt ist der Linearantrieb 126 für eine Breitenverstellung des Ausgabespalts 116 geeignet. Die eingestellte Breite des Ausgabespalts 116 variiert je nach Produktgröße, Produktform und Füllstand der Rinne und kann zwischen dem 1,2-fachen und dem 4-fachen der Produktabmessung und somit bis zu etwa 50 mm betragen.

Bei Verschiebung des Linearantriebs 126 in Richtung der Begrenzungswand 134 wird der untere Abschnitt 124 der Schlaufe 120 ebenfalls in diese Richtung bewegt. Aufgrund der Fixierung des rückwärtigen Teilbereichs des oberen Abschnitts 122 der Schlaufe 120 und der Elastizität des Materials der Schlaufe 120 findet eine Art Rollbewegung der Schlaufe 120 statt, wobei sich der obere Abschnitt 122 der Schlaufe 120 verlängert und gleichzeitig der Bogen der Schlaufe 120 näher an die Begrenzungswand 134 heranrückt.

Wird der Linearantrieb 126 nach hinten verfahren, so wird der Ausgabespalt 116 durch eine umgekehrte Rollbewegung der Schlaufe 120 wieder erweitert.

Der Linearantrieb 126 ist außerdem darauf ausgerichtet, eine Hin- und Herbewegung des unteren Abschnitts 124 der Schlaufe 120 mit kleiner Amplitude zu bewirken und somit auch für eine entsprechende pulsierende Bewegung im Bogen der Schlaufe 120 zu sorgen, wodurch sich Verklemmungen der kleinen pharmazeutischen Produkte 4 lösen und die kleinen pharmazeutischen Produkte 4 leichter durch den Austrittsspalt 116 manövriert werden. Hub und Frequenz dieser Hin- und Herbewegung geringer Amplitude sind wiederum von der Produktgröße und Produktform abhängig. Der Hub liegt grundsätzlich vorzugsweise im Bereich von zwischen 1 und 10 mm, während die Frequenz vorzugsweise in einem Bereich von zwischen 0,1 und 5 Hz, mehr bevorzugt zwischen 0,5 und 2 Hz liegt. Dieser pulsierenden Bewegung kann zusätzlich noch eine hochfrequente Vibrationsbewegung überlagert sein, die ebenfalls durch den Linearantrieb 126 erzeugt wird.

Der Linearantrieb 126 wird nun über die Regeleinrichtung 24 angesteuert. Die Regeleinrichtung 24 verwendet hierzu in erster Linie die Messsignale des Eingangssensors 20. Idealerweise werden die Breite des Ausgabespalts 116 sowie der Hub und die Frequenz der Hin- und Herbewegung des Linearantriebs 126 derart eingestellt, dass ein gleichmäßiger, vorzugsweise einlagiger Produktteppich auf dem Anfangsbereich des Schwingförderers 8 vorliegt.

Als Linearantrieb 126 können beispielsweise auch mehrere hintereinandergeschaltete Pneumatikzylinder verwendet werden. Es sind noch viele andere Ausgestaltungen des Linearantriebs 126 denkbar.

Im dargestellten Ausführungsbeispiel wurde das Dosierelement 6 als vom Vorratsbehälter 2 getrenntes, in dessen Auslaufbereich angeordnetes Element beschrieben. Ebenso ist es denkbar, dass das Dosierelement 6 einen Teil des Vorratsbehälters 2 bildet und beispielsweise in dessen Seitenwände 106, 108 integriert ist. In diesem Fall könnte die Durchtrittsöffnung 110 gleichzeitig dem Ausgabespalt 116 entsprechen.

## Patentansprüche

1. Verfahren zum optimierten Vereinzeln und Abgeben von kleinen pharmazeutischen Produkten (4) mit folgenden Schritten:
Bereitstellen eines Vorratsbehälters (2) für kleine pharmazeutische Produkte (4) mit einem Dosierelement (6) zum Beeinflussen einer aus dem Vorratsbehälter (2) abgegebenen Menge der Produkte (4);
Bereitstellen eines Schwingförderers (8) zur Aufnahme und zum Weitertransport der aus dem Vorratsbehälter (2) abgegebenen Produkte (4);
Bereitstellen einer Abgabeeinrichtung (18) zum Aufnehmen und Weiterleiten der vom Schwingförderer (8) transportierten Produkte (4);
Messen der Menge an Produkten (4) auf einem Anfangsbereich des Schwingförderers (8) im Bereich nahe dem Dosierelement (6) mittels eines Eingangssensors (20);
Zählen der durch die Abgabeeinrichtung (18) hindurchtretenden vereinzelten Produkte (4) mittels eines Zählsensors (22); und
automatisches Einstellen von Betriebsparametern des Dosierelements (6) und des Schwingförderers (8) auf Basis der vom Eingangssensor (20) und vom Zählsensor (22) ermittelten Werte mittels einer Regeleinrichtung (24).

2. Verfahren nach Anspruch 1, **dadurch gekennzeichnet, dass** ein vor dem Zählsensor (22) angeordneter Qualitätssensor (28) die Qualität jedes vereinzelten Produkts (4) überprüft.

3. Verfahren nach Anspruch 2, **dadurch gekennzeichnet, dass** auf Basis der vom Qualitätssensor (28) ermittelten Messwerte als schlecht eingestufte Produkte (4) ausgeschieden werden.

4. Verfahren nach Anspruch 2 oder 3, **dadurch gekennzeichnet, dass** der Qualitätssensor (28) in einem Eingangsbereich der Abgabeeinrichtung (18) angeordnet ist.

5. Verfahren nach einem der vorangehenden Ansprüche, **dadurch gekennzeichnet, dass** der Eingangssensor (20) als Ultraschallsensor ausgebildet ist.

6. Verfahren nach einem der vorangehenden Ansprüche, **dadurch gekennzeichnet, dass** der Zählsensor (22) als optischer Lichtschrankensensor oder Lichtgittersensor ausgebildet ist.

7. Verfahren nach einem der vorangehenden Ansprüche, **dadurch gekennzeichnet, dass** ein Fördergütesensor (26) in einem Endbereich des Schwingförderers (8) die Fördergüte der Produkte (4) auf dem Schwingförderer (8) überprüft und die Messwerte des Fördergütesensors (26) ebenfalls zum Einstellen von Betriebsparametern zumindest des Schwingförderers (8) verwendet werden.

8. Verfahren nach Anspruch 7, **dadurch gekennzeichnet, dass** der Fördergütesensor (26) als optische Kamera ausgebildet ist.

9. Verfahren nach einem der vorangehenden Ansprüche, **dadurch gekennzeichnet, dass** das Dosierelement (6) ein Schieberelement (118) zur Beeinflussung der Menge an durch einen Ausgabespalt (116) abgegebenen Produkten (4) aufweist, wobei das Schieberelement (118) an seinem vorderen Endbereich eine elastische, im Wesentlichen U-förmige Schlaufe (120) aufweist, wobei ein rückwärtiger Teilbereich des oberen Abschnitts (122) der Schlaufe (120) fixiert ist und wobei ein rückwärtiger Teilbereich des unteren Abschnitts (124) der Schlaufe (120) mit einem Linearantrieb (126) verbunden ist, der sowohl für eine Breitenverstellung des Ausgabespalts (116) durch translatorische Bewegung des unteren Abschnitts (124) der Schlaufe (120) als auch für eine Hin- und Herbewegung des unteren Abschnitts (124) der Schlaufe (120) mit kleiner Amplitude geeignet ist.

10. Verfahren nach Anspruch 9, **dadurch gekennzeichnet, dass** die elastische Schlaufe (120) aus lebensmittelechtem Gummi, vorzugsweise aus Vulkollan, gebildet ist.

11. Verfahren nach Anspruch 9 oder 10, **dadurch gekennzeichnet, dass** das Schieberelement (118) unter einem Winkel von zwischen 0° und 50°, vorzugsweise zwischen 0° und 35°, zur Horizontalen angeordnet ist.

12. Verfahren nach einem der Ansprüche 9 bis 11, **dadurch gekennzeichnet, dass** der Linearantrieb (126) ein elektromagnetischer Linearmotor ist.
